(19) Europäisches Patentamt
European Patent Office
Office européen des brevets

(11) **EP 3 109 796 A1**

(12) **EUROPEAN PATENT APPLICATION**

(43) Date of publication:
**28.12.2016 Bulletin 2016/52**

(51) Int Cl.:
***G06K 9/00*** (2006.01)

(21) Application number: **16173570.9**

(22) Date of filing: **08.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.06.2015 CN 201510358232**

(71) Applicant: **Ricoh Company, Ltd.**
**Tokyo 143-8555 (JP)**

(72) Inventors:
• **CHEN, Chao**
  **100044 Haidian District (CN)**

• **LU, Yaojie**
  **100044 Haidian District (CN)**
• **SHI, Zhongchao**
  **100044 Haidian District (CN)**
• **LI, Jingwen**
  **100044 Haidian District (CN)**
• **LIU, Tong**
  **100044 Haidian District (CN)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(54) **METHOD AND DEVICE FOR RECOGNIZING ROAD SCENE AS WELL AS RELEVANT PROGRAM AND NON-TRANSITORY COMPUTER-READABLE MEDIUM**

(57)    Disclosed is a road line recognition method comprising steps of dividing a disparity map including a road scene into plural sub image regions (S210); extracting, regarding each sub image region, a feature vector generated based on projection information of respective pixels therein on each plane defined by a world coordinate system (S220); dividing the disparity map into plural cells having a predetermined size so as to determine sub feature vectors corresponding to the plural cells according to the feature vectors corresponding to the plural sub image regions (S230); and recognizing, by utilizing a road scene classifier pre-trained according to a statistical learning approach, the road scene based on the sub feature vectors corresponding to the plural cells (S240).

FIG.2

```
START
  │
  ▼
DIVIDE DISPARITY MAP INCLUDING ROAD SCENE INTO        S210
SUB IMAGE REGIONS
  │
  ▼
FOR EACH SUB IMAGE REGION, EXTRACT FEATURE           S220
VECTOR GENERATED BASED ON PROJECTION
INFORMATION OF RESPECTIVE PIXELS THEREIN ON
EACH PLANE DEFINED BY WORLD COORDINATE SYSTEM
  │
  ▼
DIVIDE DISPARITY MAP INTO CELLS AND DETERMINE        S230
SUB FEATURE VECTORS OF CELLS ACCORDING TO
FEATURE VECTORS OF SUB IMAGE REGIONS
  │
  ▼
RECOGNIZE ROAD SCENE BASED ON SUB FEATURE            S240
VECTORS OF CELLS BY USING PRE-TRAINED
CLASSIFIER
  │
  ▼
END
```

EP 3 109 796 A1

**Description**

BACKGROUND OF THE INVENTION

1. Field of the Invention

The present disclosure relates to the field of image processing, more particularly relates to a method and device for recognizing a road scene as well as the relevant program and non-transitory computer-readable medium.

2. Description of the Related Art

Reliable understanding of a three-dimensional road environment is very important for the autonomous driving of a vehicle. The understanding of the three-dimensional road environment mainly includes road scene recognition (road classification), road surface estimation, vanishing point calculation, vehicle detection, pedestrian recognition, and so on. Among these, the road scene recognition is very important for the understanding of the three-dimensional road environment, which is mainly used to recognize a road scene in a road image.

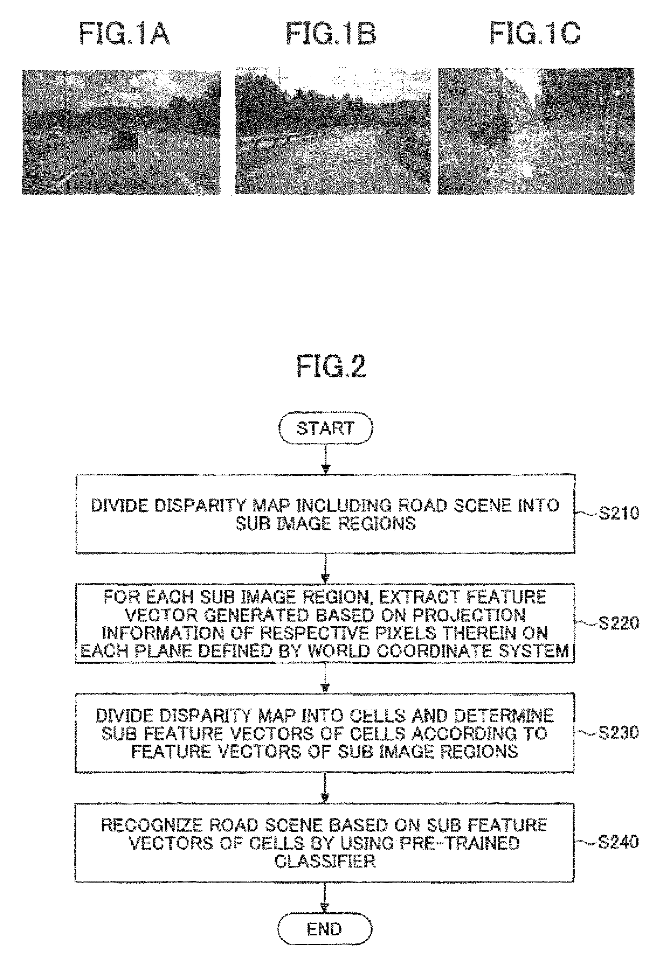

FIGS. 1A to 1C illustrates a few familiar road scenes.

As presented in FIGS. 1A to 1C, a road scene may include a straight road, a curved road, a crossroad, and so forth. A specific road scene recognized by road scene recognition may provide very useful information to the selection of a road detection model, the detection of an available driving area, the recognition of a pedestrian or vehicle, the selection of an ACC (Adaptive Cruise Control) orAEB (Autonomous Emergency Braking) driving mode, and others.

The conventional road scene recognition methods are mainly divided into three classes, namely, a low-level feature based one, a segmentation based one, and a target based one. The low-level feature based method conducts pixel or image classification by adopting microscopic features such as colors, edges, and gradients. However, in this kind of method, there is not enough information, thereby easily resulting in a recognition result whose robustness is not good enough. The segmentation based method carries out, by combining some recognized image regions, recognition with respect to the whole road scene image. However, since this kind of method only provides local information, i.e., it does not have global information, the recognition result is not accurate enough. In addition, the target based method utilizes a detected target (e.g., a vehicle or a road line) to serve as a clue for recognizing the relevant road scene. However, this kind of method needs to detect many targets in advance, so it needs a lot of additional calculation and is difficultly achieved in a complicated road scene.

SUMMARY OF THE INVENTION

The present disclosure is proposed in light of the above problems in the conventional techniques.

According to a first aspect of the present disclosure, a method of recognizing a road scene is provided. The method includes:

a division step of dividing a disparity map including the road scene into plural sub image regions;
an extraction step of extracting, for each sub image region, a feature vector generated based on projection information of respective pixels in the corresponding sub image region, on each plane defined by a world coordinate system;
a determination step of dividing the disparity map into plural cells each of which has a predetermined size, and then, based on the feature vectors of the plural sub image regions, determining a sub feature vector of each cell; and
a recognition step of recognizing, based on the sub feature vectors of the plural cells, the road scene by utilizing a road scene classifier pre-trained according to a statistical learning approach.

According to a second aspect of the present disclosure, a device for recognizing a road scene is provided which includes a processor, a storage, and computer-executable instructions stored in the storage. The computer-executable instructions, when executed, cause the processor to carry out:

a division step of dividing a disparity map including the road scene into plural sub image regions;
an extraction step of extracting, for each sub image region, a feature vector generated based on projection information of respective pixels in the corresponding sub image region, on each plane defined by a world coordinate system;
a determination step of dividing the disparity map into plural cells each of which has a predetermined size, and then, based on the feature vectors of the plural sub image regions, determining a sub feature vector of each cell; and
a recognition step of recognizing, based on the sub feature vectors of the plural cells, the road scene by utilizing a road scene classifier pre-trained according to a statistical learning approach.

According to a third aspect of the present disclosure, a device for recognizing a road scene is provided. The device includes:

a division part configured to divide a disparity map including the road scene into plural sub image regions;
an extraction part configured to extract, for each sub image region, a feature vector generated based on projection information of respective pixels in the corresponding sub image region, on each plane defined by a world coordinate system;
a determination part configured to divide the disparity map into plural cells each of which has a predetermined size, and then, based on the feature vectors of the plural sub image regions, to determine a sub feature vector of each cell; and
a recognition part configured to recognize, based on the sub feature vectors of the plural grids, the road scene by utilizing a road scene classifier pre-trained according to a statistical learning approach.

According to a fourth aspect of the present disclosure, a program for causing a computer to carry out the above-described method of recognizing a road scene is provided.

According to a fifth aspect of the present disclosure, a non-transitory computer-readable medium storing computer-executable instructions for execution by a processing system is provided. The computer-executable instructions, when executed, cause the processing system to carry out the above-described method of recognizing a road scene.

As a result, by utilizing the above-described method and devices, it is possible to enhance some useful information for road scene recognition and to cause some objects, which are not easily distinguished by using the conventional techniques, to be linearly separable, so that the road scene recognition may have a higher accuracy.

BRIEF DESCRIPTION OF THE DRAWINGS

FIGS. 1A to 1C illustrate a few familiar road scenes;
FIG. 2 is a flowchart of a method of recognizing a road scene, according to an embodiment of the present disclosure;
FIG. 3A illustrates a disparity map of a road scene;
FIG. 3B illustrates plural sub image regions obtained by dividing the disparity map presented in FIG. 3A;
FIG. 4 is a flowchart of a process of extracting a feature vector generated based on projection information of the respective pixels in a sub image region, on each plane defined by a world coordinate system;
FIG. 5A illustrates the projected points of the respective pixels of a sub image region, in the world coordinate system;
FIGS. 5B to 5D illustrate the projected points of the points projected in the world coordinate system presented in FIG. 5A, on the XY, XZ, and YZ planes defined by the world coordinate system, respectively;
FIGS. 6A to 6C illustrate line segments acquired by fitting the projected points on the XY, XZ, and YZ planes presented in FIGS. 5B to 5D, respectively;
FIG. 7A illustrates an original disparity map of a road scene;
FIG. 7B illustrates an image of the original disparity map presented in FIG. 7A, reconstructed by using the line segments fitted on the XY plane defined by the world coordinate system;
FIG. 8A illustrates a grayscale image corresponding to the original disparity map presented in FIG. 7A;
FIG. 8B illustrates the projection of each of plural objects in the grayscale image presented in FIG. 8A, in a three-dimensional feature space;
FIG. 8C illustrates the projection of each of the plural objects in the grayscale image presented in FIG. 8A, on a two-dimensional feature space;
FIG. 9 includes left and right images, the left image illustrating a grayscale image including a road scene having a broken road line, the right image illustrating the projection of the broken road line in the left image on a two-dimensional feature space;
FIG. 10 includes left and right images, the left image illustrating a grayscale image including a road scene having plural road lines, the right image illustrating the projection of each of the plural road lines in the left image on a two-dimensional feature space;
FIG. 11 includes left and right images, the left image illustrating a grayscale image including a road scene having plural curved road lines, the right image illustrating the projection of each of the curved road lines in the left image on a two-dimensional feature space;
FIG. 12A illustrates a grayscale image including a road scene having a zebra crossing;
FIG. 12B illustrates the projection of the zebra crossing presented in FIG. 12A, in a three-dimensional feature space;
FIG. 13 is a block diagram of a device for recognizing a road scene, according to an embodiment of the present disclosure; and

FIG. 14 is a block diagram of a computing device able to achieve a road scene recognition process, according to an embodiment of the present disclosure.

DETAILED DESCRIPTION OF THE PREFERRED EMBODIMENTS

In order to let those people skilled in the art better understand the present disclosure, hereinafter, the embodiments of the present disclosure will be concretely described with reference to the drawings. However, it should be noted that the same symbols, which are in the specification and the drawings, stand for constructional elements having basically the same function and structure, and repeated explanations for the constructional elements are omitted.

First some technical terms involved in the present disclosure will be briefly introduced as follows.

As is well known, a grayscale image is a kind of monochrome image having plural grayscale levels from black to white. Each pixel therein is usually represented by 8-bit data, so the grayscale image may have 256 levels. For more information about the grayscale image, it is possible to see https://en.wikipedia.org/wiki/Grayscale, for example. A color image is a kind of image including color information expressed by R (Red), G (Green), and B (Blue) components for each pixel, the value of each component being in a range from 0 to 255. For more information about the color image, it is possible to see https://en.wikipedia.org/wiki/Color image, for instance. In spite of this, the main function of the grayscale image is similar to the main function of the color image (i.e., both are used for expressing color information). As such, the grayscale image appearing in what follows may be replaced by its corresponding color image.

In addition, a disparity map is a kind of image whose size is, when letting one of left and right images be a reference image, the size of the reference image and each pixel of which has a value the same as the disparity of the corresponding pixel in the reference image. The coordinates of each pixel in the disparity map may be expressed as (x,y,d) in which x refers to the horizontal coordinate of the corresponding pixel, y stands for the vertical coordinate of the corresponding pixel, and d denotes the disparity of the corresponding pixel. Compared to the grayscale/color image, the disparity map has disparity (depth) information of the relevant object, so it is suitable for various applications needing stereo information. For more information about the disparity map, for example, it is possible to see

https://en.wikipedia.org/wiki/Binocular disparity.

Next a method of recognizing a road scene according to an embodiment of the present disclosure will be given by referring to FIG. 2.

FIG. 2 is a flowchart of a method of recognizing a road scene according to this embodiment.

As presented in FIG. 2, the method includes STEPS S210 to S240.

First, in STEP S210 of FIG. 2, a disparity map including the road scene is divided into plural sub image regions.

Generally speaking, clustering and segmentation are two kinds of approaches for dividing an image. Here it is possible to adopt any proper clustering or segmentation algorithm to divide the disparity map including the road scene into plural sub image regions.

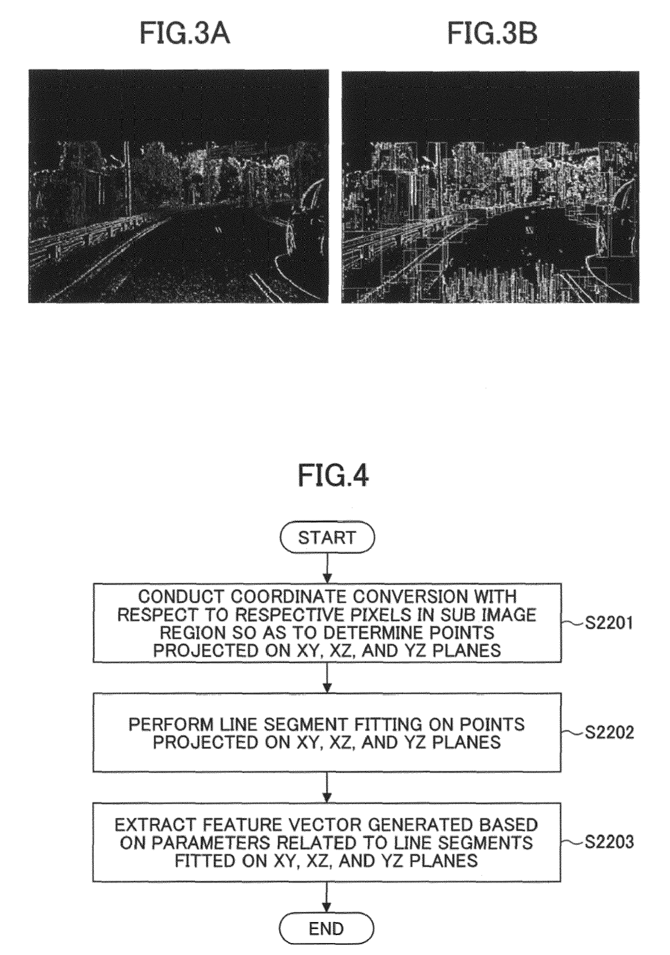

FIG. 3A illustrates a disparity map of a road scene.

FIG. 3B illustrates plural sub image regions obtained by dividing the disparity map presented in FIG. 3A according to a CCA (Connected Component Analysis) based approach which is a kind of clustering algorithm.

As presented in FIG. 3B, there are plural rectangles therein. Each rectangle indicates a sub image region in which pixels, whose disparities approach each other and which are adjacent along the horizontal and vertical directions, are clustered together so as to form a class.

Here it should be noted that actually each sub image region acquired by conducting clustering has an outline around the pixels belonging to the class corresponding to the corresponding sub image region, but the outline is not limited to a rectangle. Moreover, the outlines of different sub image regions do not overlap each other in the relevant three-dimensional space. Furthermore, in this specification, adopting a rectangle to represent a sub image region is just an example for illustration; that is, the present disclosure is not limited to this.

In addition, the degree of segmentation of the disparity map may be controlled by adjusting the criterion and parameters of the clustering or segmentation algorithm adopted. Optionally it is possible to adjust the criterion and parameters so as to let the disparity map be over-segmented. Here the so-called "over-segmentation" indicates that regarding a complete object, it may include plural sub image regions, but each sub image region may only include at most one object. Optionally it is possible to adjust the criterion and parameters so as to let the disparity map be insufficiently segmented. Here the so-called "insufficient segmentation" means that plural similar objects may be divided into a same sub image region. Optionally it is also possible to adjust the criterion and parameters so as to let each sub image region divided exactly include only one complete object and to let each object exist in one sub image region. However, the present disclosure is not limited to this. Hereinafter, for the sake of convenience, the over-segmentation approach will be taken as an example for illustration.

Next, in STEP S220 of FIG. 2, for each sub image region, a feature vector, which is generated based on projection information (data) of the respective pixels in the corresponding sub image region on the respective planes defined by a world coordinate system, is extracted.

In what follows, the process of this step will be depicted in detail by referring to FIG. 4.

FIG. 4 is a flowchart of a process of extracting a feature vector which is generated based on projection information of the respective pixels in a sub image region, on each plane defined by the world coordinate system.

As presented in FIG. 4, the process includes STEP S2201 to S2202.

In STEP S2201 of FIG. 4, by carrying out coordinate conversion, it is possible to determine the projected points of the respective pixels in the sub image region, on the XY, XZ, and YZ planes defined by the world coordinate system, respectively.

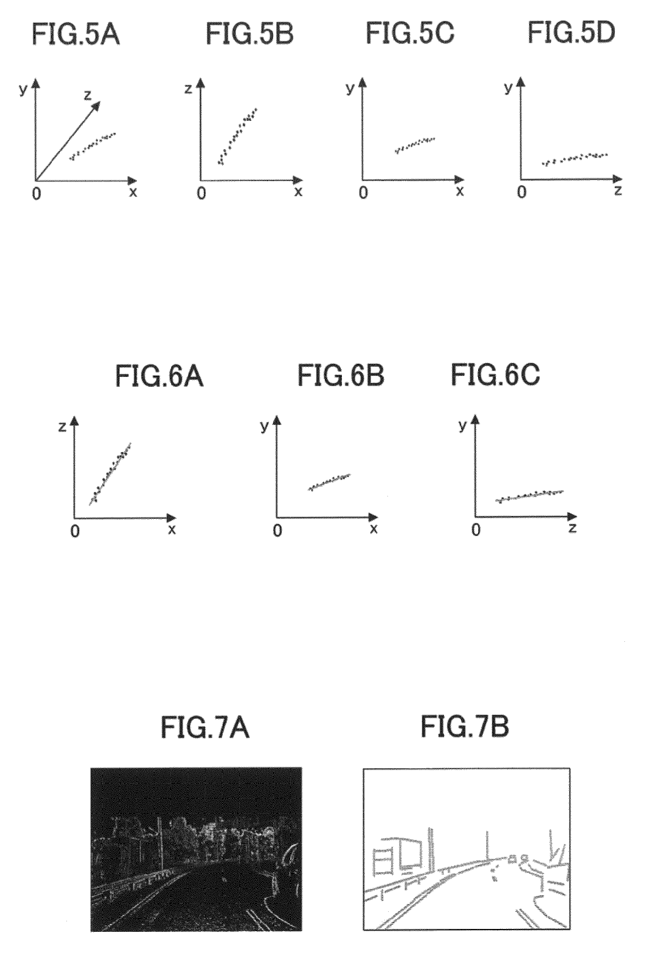

As is well known, each pixel in a disparity map represents a position in the relevant three-dimensional space. Hence, by conducting the coordinate conversion, it is possible to determine the projected points of the respective pixels in the sub image region in the world coordinate system, so as to obtain the projected points of the respective pixels on the XY, XZ, and YZ planes, respectively. An example is illustrated in FIGS. 5A to 5D.

FIG. 5A illustrates the points of the respective pixels of the sub image region, projected in the world coordinate system.

FIGS. 5B to 5D illustrate the projected points of the points projected in the world coordinate system presented in FIG. 5A, on the XY, XZ, and YZ planes defined by the world coordinate system, respectively.

Here it should be noted that since how to project the respective pixels in a sub image region onto the XY, XZ, and YZ planes defined by the world coordinate system is well known to those skilled in the art, the detailed description is omitted for the sake of convenience.

In STEP S2202 of FIG. 4, line segment fitting is conducted with respect to the points projected on the XY, XZ, and YZ planes, respectively.

It is possible to adopt any proper linear fitting approach such as a least-squares approach to carry out line segment fitting on the respective planes. An example is illustrated in FIGS. 6A to 6C.

FIGS. 6A to 6C illustrate line segments acquired by fitting the points projected on the XY, XZ, and YZ planes presented in FIGS. 5B to 5D, respectively.

Here it should be noted that by conducting the above-described line segment fitting process with respect to the respective pixels in each sub image region, the disparity map including the road scene may be expressed by the line segments fitted on the respective planes. Here the line segments on the respective planes correspond to the relevant object in the disparity map including the road scene. An example is illustrated in FIGS. 7A and 7B.

FIG. 7A illustrates an original disparity map of a road scene.

FIG. 7B illustrates an image of the original disparity map presented in FIG. 7A, reconstructed by using the line segments fitted on the XY plane defined by the world coordinate system.

After that, in STEP S2203 of FIG. 4, a feature vector which is generated based on parameters related to the fitted line segments (i.e., the projection information) is extracted.

The feature vector may be formed by selecting suitable line segment parameters so as to enhance the information useful for recognizing the road scene and to cause an object(s), which is not easily distinguished by using the conventional techniques, to be linearly separable, so that it is possible to improve the accuracy of the road scene recognition result.

As an example, the line segment parameters may include the polar coordinate based expression of a line segment fitted on the XY, XZ, and YZ planes. In particular, regarding a line segment, it may be expressed by its polar coordinates using the following formula (1).

$$\rho = x \cdot \cos(\theta) + y \cdot \sin(\theta) \qquad (1)$$

Thus, regarding a line segment in a sub image region used for representing an object, it is possible to utilize the polar coordinates of the corresponding line segments fitted on the XY, XZ, and YZ planes to make up a feature vector as follows.

$$f_{line} = (\theta_{xy}, \theta_{xz}, \theta_{yz}, \rho_{xy}, \rho_{xz}, \rho_{yz}) \qquad (2)$$

Here, $\rho_{xy}$, $\rho_{xz}$, and $\rho_{yz}$ respectively stand for the distances from the origin to the line segments fitted on the XY, XZ, and YZ planes, and $\theta_{xy}$, $\theta_{xz}$, and $\theta_{yz}$ respectively refer to the angles between the relevant polar axes and the straight lines perpendicular to the line segments fitted on the XY, XZ, and YZ planes.

As another example, the line segment parameters may further include the length of each of the line segments fitted on the XY, XZ, and YZ planes as well as the intersection coordinates between the straight lines including the line segments fitted and their corresponding vanishing lines on the XY, XZ, and YZ planes. In particular, regarding a line segment in a sub image region used for representing an object, it is possible to generate a feature vector expressed by the following formula (3).

$$f_{line} = (\theta_{xy}, \theta_{xz}, \theta_{yz}, \rho_{xy}, \rho_{xz}, \rho_{yz}, l_{xy}, l_{xz}, l_{yz}, v_{xz}, v_{xy}, v_{yz}) \quad (3)$$

Here, $l_{xy}$, $l_{xz}$, and $l_{yz}$ respectively indicate the lengths of the line segments fitted on the XY, XZ, and YZ planes, and $v_{xz}$, $v_{xy}$, and $v_{yz}$ respectively denote the intersection coordinates between the straight lines including the line segments fitted and their corresponding vanishing lines on the XY, XZ, and YZ planes. Here, $v_{xy}$ stands for the X coordinate of the intersection of the line segment fitted and its corresponding vanishing line on the XY plane; $v_{xz}$ refer to the X coordinate of the intersection of the line segment fitted and its corresponding vanishing line on the XZ plane;; and $v_{yz}$ refers to the Y coordinate of the line segment fitted and its corresponding vanishing line on the YZ plane.

Here it should be noted that the feature vectors expressed by the formulae (2) and (3) are just examples for illustration; that is, those skilled in the art may create any other proper formula as needed. For example, the polar coordinate based expression of the line segment may also be expressed by adopting the coordinates of the two ends of the line segment, the coordinates of the midpoint of the line segment together with the slope of the line segment, etc., so as to generate the corresponding feature vector. Again, for example, it is also possible to generate a feature vector on the grounds of the polar coordinate based expression of each of the line segments fitted on the XY, XZ, and YZ planes and their lengths therein, without considering the intersection coordinates of the straight lines including the line segments fitted on the XY, XZ, and YZ planes and their corresponding vanishing lines therein.

In what follows, a few exemplary sub image regions and the corresponding feature vectors expressed by the formula (2) or (3) above will be given for easily understanding this embodiment. Here it should be noted that since it is impossible to directly visualize a multi-dimensional feature vector expressed by the formula (2) or (3) above, in the following examples, the multi-dimensional feature vector will be mapped to plural low-dimensional feature spaces from its high-dimensional feature space for illustration.

(Example 1)

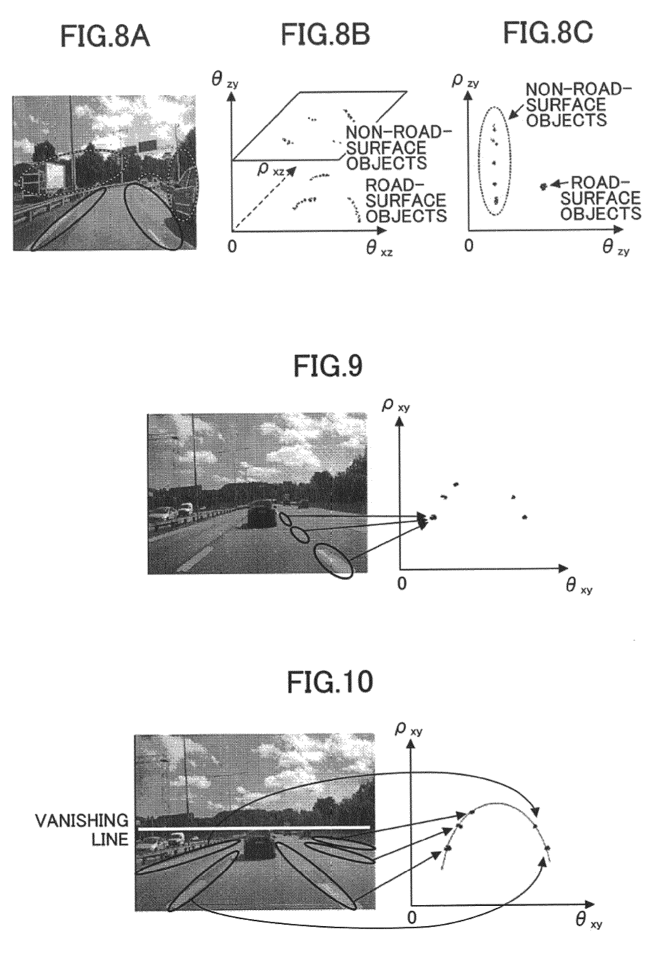

FIG. 8A illustrates a grayscale image corresponding to the original disparity map presented in FIG. 7A.

As presented in FIG. 8A, the solid ellipses mark some road-surface objects (e.g., road lines and shadows on the road surface) represented by line segments in the road scene, and the dotted ellipses indicate some non-road-surface objects (e.g., vehicles and pedestrians perpendicular to the road surface) represented by line segments in the road scene.

FIG. 8B illustrates the projection of the road-surface and non-road-surface objects presented in FIG. 8A, in an exemplary three-dimensional feature space $(\theta_{xz}, \theta_{zy}, \rho_{xz})$.

As presented in FIG. 8B, since the road-surface objects have a same slope angle $\theta_{zy}$, these kinds of objects may be projected onto a plane $(\theta_{xz}, \rho_{xz})$ having the same $\theta_{zy}$. In addition, since the non-road-surface objects have another same slope angle $\theta_{zy}$, these kinds of objects may be projected onto a plane $(\theta_{xz}, \rho_{xz})$ having the other same $\theta_{zy}$.

FIG. 8C illustrates the projection of the road-surface and non-road-surface objects presented in FIG. 8A, on an exemplary two-dimensional feature space $(\theta_{zy}, \rho_{xz})$.

As presented in FIG. 8C, all the road-surface objects have the same slope angle $\theta_{zy}$ and the same distance $\rho_{zy}$, so these kinds of objects should be projected onto one point in the two-dimensional feature space $(\theta_{zy}, \rho_{xz})$. However, actually there exists the influence due to the noise involved and the line segment fitting accuracy, so the road-surface objects are projected onto a small region in the two-dimensional feature space $(\theta_{zy}, \rho_{xz})$, as presented in this drawing. Here it may be understood that since all the road-surface objects are projected onto the small region (a point in the ideal case), the valid road recognition information may be enhanced.

In addition, the non-road-surface objects have the other same slope angle $\theta_{zy}$ and different distances $\rho_{zy}$, and their projection distribution in the two-dimensional feature space $(\theta_{zy}, \rho_{xz})$ is presented in FIG. 8C. Here it may be understood that for example, in FIG. 8A, an object (e.g., a vehicle) located at the end of the road is difficultly distinguished from the road-surface objects, whereas in FIG. 8C, this kind of non-road-surface object may be easily distinguished from the road-surface objects. That is, some objects which are not easily distinguished by using the conventional techniques may become linearly separable in this embodiment.

(Example 2)

FIG. 9 includes left and right images. The left image illustrates a grayscale image including a road scene having a broken road line marked by the solid ellipses therein. The right image illustrates the projection of the broken road line marked by the solid ellipses in the left image, on an exemplary two-dimensional feature space $(\theta_{xy}, \rho_{xy})$.

(Example 3)

FIG. 10 includes left and right images. The left image illustrates a grayscale image including a road scene having plural road lines marked by the solid ellipses therein. The line segments obtained by fitting the projected points of the plural road lines on the XY plane have a same feature value $v_{xy}$; that is, they have the same intersection with the vanishing point. In other words, the straight lines, to which the fitted line segments belong, intersect at the same point $(v_{xy}, y_{xy})$ on the XY plane. In addition, the equation of all the straight lines passing through the same point is as follows.

$$\rho(\theta) = v_{xy} \cdot \cos(\theta) + y_{xy} \cdot \sin(\theta)$$

Here, $\rho$ refers to the distance from a straight line to the origin on the XY plane, and $\theta$ stands for the angle between another straight line perpendicular to the straight line and the polar axis on the XY plane. As such, according to the principle of the Hough transform, all the straight lines passing through the same point $(v_{xy}, y_{xy})$ may be projected onto a sinusoidal curve on the two-dimensional feature space $(\theta_{xy}, \rho_{xy})$, as presented in the right image of FIG. 10.

(Example 4)

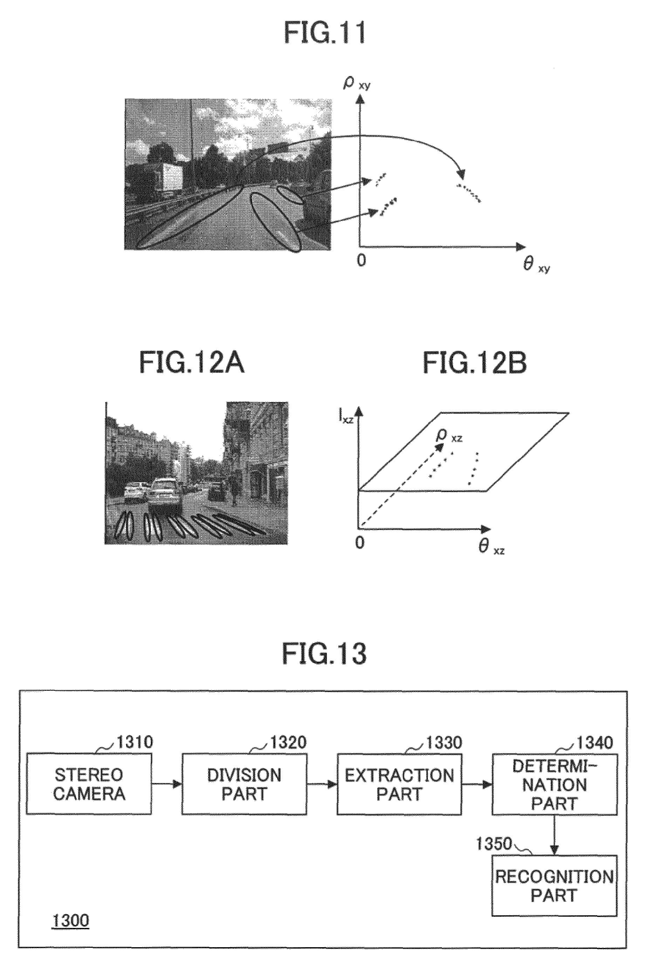

FIG. 11 includes left and right images. The left image illustrates a grayscale image including a road scene having plural curved road lines marked by the solid ellipses therein. The right image illustrates the projection of the plural curved road lines marked by the solid ellipses in the left image, on an exemplary two-dimensional space $(\theta_{xy}, \rho_{xy})$.

(Example 5)

FIG. 12A illustrates a grayscale image including a road scene having a zebra crossing consisting of dark and light stripes.
As presented in FIG. 12A, the solid ellipses therein mark the two sides of each light stripe along its length direction. Since the respective light stripes have a same length $l_{xy}$, when projecting the zebra crossing in FIG. 12A in the three-dimensional feature space $(l_{xz}, \theta_{xz}, \rho_{xz})$, it may be projected onto a same plane therein, as presented in FIG. 12B.
FIG. 12B illustrates the projection of the zebra crossing in FIG. 12A, in the three-dimensional feature space.
As a result, according to Examples 1 to 5, it may be understood that by adopting the feature vector expressed by the formula (2) or (3) to enhance some information useful for road scene recognition so as to cause some objects, which are not easily distinguished by using the conventional techniques, to be linearly separable, it is possible to improve the road scene recognition accuracy.
Up to here, how to acquire a feature vector generated based on projection information of the respective pixels in a sub image region, on the XY, XZ, and YZ planes defined by the world coordinate system has been described. Here it should be noted that depending on the degree of division of the disparity image, there may also exist one or more line segments for representing an object in a sub image region; as such, in this case, one or more feature vectors may be obtained with respect to this sub image region.
In addition, as described above, the road scene recognition process in the embodiments of the present disclosure is carried out on the grounds of a disparity map, and the respective sub image regions are also ones obtained by dividing the disparity map. The reason why the grayscale image corresponding to the disparity map is adopted in each of Examples 1 to 5 is just because the grayscale image is more intuitive and more helpful than the disparity map.
Referring again to FIG. 2; in STEP S230, the disparity map is divided into plural cells having a predetermined size, and then, on the basis of the feature vector of each sub image region, a sub feature vector of each cell is determined.
Here it should be noted regarding the size of each cell, it may be predetermined as needed. For the sake of convenience, it is assumed that the disparity map is divided into M×N cells in advance. However, the present disclosure is not limited to this.
Each cell may include one or more objects or a portion(s) of one or more objects, or may not include any object. In this embodiment, regarding each cell, its sub feature vector is determined based on a feature vector which may mostly represent the sub image region where the object in this cell is located.

As an example, with respect to a cell i among the M×N cells, it is possible to use the following formula (4) to express its sub feature vector.

$$f_{i,cell} = \begin{cases} 0 & condition\ 1 \\ f_{j,line} & condition\ 2 \end{cases}$$

Here, $f_{i,cell}$ refers to the sub feature vector of the cell i; *condition 1* means that there is not a line segment in the cell i, and if *condition 1* is satisfied, then $f_{i,cell}$ is equal to zero; and *condition 2* indicates that there is a longest line segment j in the cell i, and if *condition 2* is met, then $f_{i,cell}$ is equal to $f_{j,line}$ which is the feature vector of the longest line segment j and may be determined based on the feature vector of the sub image region where the longest segment j is located.

For example, if it is supposed that the feature vector is expressed by the formula (2), then regarding the longest line segment j in the cell i, its feature vector $f_{j,cell}$ is the same as the feature vector extracted from the sub image region, in which the line segment j is located, with respect to the line segment J including the line segment j therein (i.e., the line segment j is a part or the whole of the line segment J). Similarly if it is assumed that the feature vector is expressed by the formula (3), then regarding the longest line segment j in the cell i, the features $\theta_{xy}$, $\theta_{xy}$, $\theta_{yz}$, $\rho_{xy}$, $\rho_{xz}$, $\rho_{yz}$, $v_{xz}$, $v_{xy}$, and $v_{yz}$ in its feature vector $f_{j,line}$ is the same as the corresponding features extracted from the sub image region, in which the line segment j is located, with respect to the line segment J including the line segment j; and the features $l_{xy}$, $l_{xz}$, and $l_{yz}$ in the feature vector $f_{j,line}$ may be determined on the basis of the ratio of the length of the line segment j to the length of the line segment J as well as the features $l_{xy}$, $l_{xz}$, and $l_{yz}$ corresponding to the line segment J.

Here it should be noted that what the formula (4) expresses is just an example; that is, it is also possible to adopt any other proper approach to determine the sub feature vector of the cell i. For instance, the average value of the feature vectors of N line segments, whose lengths are greater than a predetermine threshold, in the cell i may serve as the sub feature vector of this cell.

After that, in STEP S240 of FIG. 2, by utilizing a road scene classifier pre-trained based on a statistical learning approach, it is possible to recognize the road scene on the grounds of the sub feature vectors of the respective cells.

In this embodiment, a high-dimensional feature vector, which is generated by combining the sub feature vectors of the respective cells and is expressed by the following formula (5), may serve as a feature vector of the disparity map, which is used for describing the whole road scene in the disparity map.

$$f_{image}=[f_{1,unit},\ f_{2,unit},\ ...,\ f_{M\times N,unit}] \qquad (5)$$

After the feature vector of the disparity map is acquired, it is possible to carry out classification with respect to this feature vector by using the road scene classifier pre-trained so as to recognize the road scene.

Here it should be noted that the road scene classifier may be pre-trained based on both plural feature vectors of different road scene disparity maps which are sampled in advance and the corresponding road scene tags such as a straight road, a curved road, and a crossroad. And all the sampled plural feature vectors of the different road scene disparity maps adopt the form of the formula (5). Since how to train a classifier on the basis of plural feature vectors and the corresponding tags is well known to those skilled in the art, the related descriptions are omitted.

Up to here, the road scene recognition method according to this embodiment has been depicted by referring to the drawings. By utilizing this kind of method, it is possible to enhance some useful information for road scene recognition and to cause some objects, which are not easily distinguished by using the conventional techniques, to be linearly separable, so that the road scene recognition result may have a higher accuracy.

In what follows, a road scene recognition device according an embodiment of the present disclosure will be described on the basis of FIG. 13.

FIG. 13 is a block diagram of a road scene recognition device 1300 according to this embodiment.

The road scene recognition device 1300 may be provided on a vehicle for recognizing a road scene in real time.

As presented in FIG. 13, the road scene recognition device 1300 may include a stereo camera 1310, a division part 1320, an extraction part 1330, a determination part 1340, and a recognition part 1350.

The stereo camera 1310 may be used for obtaining a disparity image including the road scene to be recognized. In a case where it is possible to obtain a disparity map including a road scene in another way, the stereo camera 1310 may also be omitted.

The division part 1320, the extraction part 1330, the determination part 1340, and the recognition part 1350 may be configured to carry out STEPS S210 to S240 of FIG. 2, respectively. Here it should be noted that since these steps have been depicted above in detail, the related descriptions are omitted here.

As a result, by utilizing the road scene recognition device according to this embodiment, it is possible to enhance some useful information for road scene recognition and to cause some objects, which are not easily distinguished by using the conventional techniques, to be linearly separable, so that the road scene recognition result may have a higher accuracy.

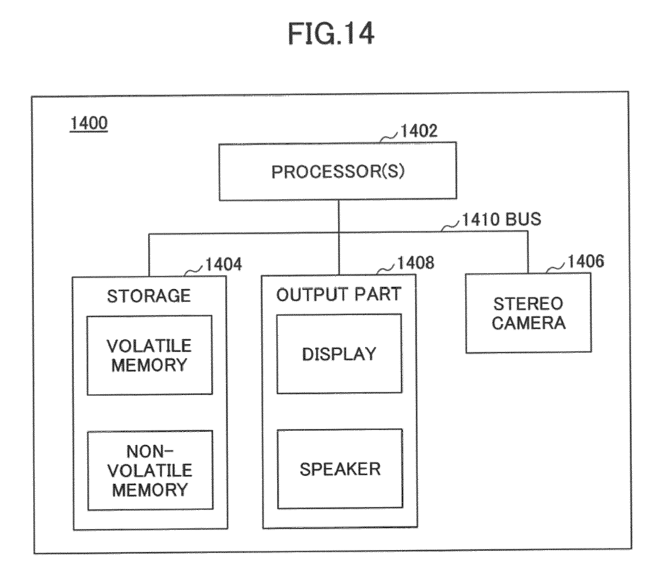

In what follows, a computing device able to achieve a road scene recognition process, according to an embodiment of the present disclosure will be described by referring to FIG. 14.

FIG. 14 is a block diagram of a computing device 1400 according to this embodiment.

As presented in FIG. 14, the computing device 1400 may include one or more processors 1402, a storage 1404, a stereo camera 1406, an output part 1408, and a bus 1410. Of course, the computing device 1400 may also include any other proper device as needed.

The one or more processors 1402 may be configured to conduct the road scene recognition method according to the embodiment above, and may include conventional central processing units (CPUs), for example. Here it should be noted that since the road scene recognition method according to the embodiment above has been depicted in detail above, the related description is omitted here.

The storage 1404 may be configured to store one or more programs and the relevant data for carrying out the road scene recognition method according to the embodiment above, and may include a volatile memory and a non-volatile memory, for instance.

The stereo camera 1406 may be configured to get a disparity map including a road scene waiting for recognition.

The output part 1408 may be configured to output the result obtained after conducting the road scene recognition method according to the embodiment above, and may include a display and a speaker, for example.

The bus 1410 may be configured to connect the one or more processors 1402, the storage 1404, the stereo camera 1406, and the output part 1408.

As a result, by utilizing the computing device according to this embodiment, it is also possible to enhance some useful information for road scene recognition and to cause some objects, which are not easily distinguished by using the conventional techniques, to be linearly separable, so that the road scene recognition result may have a higher accuracy.

In addition, it should be noted that the above respective embodiments are just exemplary ones, and the specific structure and operation of them may not be used for limiting the present disclosure.

Moreover, the embodiments of the present disclosure may be implemented in any convenient form, for example, using dedicated hardware or a mixture of dedicated hardware and software. The embodiments of the present disclosure may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G-compliant phone) and so on. Since the embodiments of the present disclosure can be implemented as software, each and every aspect of the present disclosure thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present disclosure is described with reference to the specific embodiments chosen for purpose of illustration, it should be apparent that the present disclosure is not limited to these embodiments, but numerous modifications could be made thereto by those people skilled in the art without departing from the basic concept and technical scope of the present disclosure.

The present application is based on and claims the benefit of priority of Chinese Patent Application No. 201510358232.9 filed on June 25, 2015, the entire contents of which are hereby incorporated by reference.

**Claims**

**1.** A method of recognizing a road scene, comprising:

dividing a disparity map including the road scene into plural sub image regions;

extracting, for each sub image region, a feature vector generated based on projection information of respective pixels therein on each plane defined by a world coordinate system;

dividing the disparity map into plural cells having a predetermined size, and determining sub feature vectors corresponding to the plural cells according to the feature vectors corresponding to the plural sub image regions; and

recognizing the road scene based on the sub feature vectors corresponding to the plural cells by utilizing a road scene classifier pre-trained according to a statistical learning approach.

2. The method according to claim 1, wherein, the dividing the disparity map into plural cells having a predetermined size includes adopting a clustering or segmentation approach to divide the disparity map including the road scene into the plural sub image regions.

3. The method according to claim 1 or 2, wherein each sub image region includes at most one object.

4. The method according to claim 1, 2, or 3, wherein the extracting, for each sub image region, a feature vector generated based on projection information of respective pixels therein on each plane defined by a world coordinate system includes:

conducting coordinate conversion so as to determine projection points of the respective pixels in the corresponding sub image region, on XY, XZ, and YZ planes defined by the world coordinate system, respectively;

carrying out line segment fitting with respect to the projection points on the XY, XZ, and YZ planes, respectively; and

extracting the feature vector of the corresponding sub image region, generated based on parameters related to the line segments fitted on the XY, XZ, and YZ planes.

5. The method according to claim 4, wherein the parameters include at least a polar coordinate based expression of the line segments fitted on the XY, XZ, and YZ planes.

6. The method according to claim 5, wherein the parameters further includes lengths of the line segments fitted on the XY, XZ, and YZ planes and coordinates of intersections between straight lines including the line segments fitted on the XY, XZ, and YZ planes and vanishing lines therein.

7. The method according to any one previous claim, wherein the determining sub feature vectors corresponding to the plural cells according to the feature vectors corresponding to the plural sub image regions includes:

for each cell, determining, based on the feature vectors corresponding to the plural sub image region, a feature vector corresponding to a longest line segment in the corresponding cell so as to serve as the sub feature vector of the corresponding cell.

8. The method according to any one previous claim, wherein the recognizing the road scene based on the sub feature vectors corresponding to the plural cells by utilizing a road scene classifier pre-trained according to a statistical learning approach includes:

combining the sub feature vectors corresponding to the plural cells so as to generate a feature vector corresponding to the disparity map; and

conducting, by utilizing the road scene classifier, classification with respect to the feature vector corresponding to the disparity map, thereby recognizing the road scene,

wherein, the road scene classifier is pre-trained based on both feature vectors corresponding to different road scenes and corresponding road scene tags.

9. A device for recognizing a road scene, comprising:

a division part configured to divide a disparity map including the road scene into plural sub image regions;

an extraction part configured to extract, for each sub image region, a feature vector generated based on projection information of respective pixels therein on each plane defined by a world coordinate system;

a determination part configured to divide the disparity map into plural cells having a predetermined size so as to determine sub feature vectors corresponding to the plural cells according to the feature vectors corresponding to the plural sub image regions; and
a recognition part configured to recognize, by utilizing a road scene classifier pre-trained according to a statistical learning approach, the road scene based on the sub feature vectors corresponding to the plural cells.

10. The device according to claim 9, wherein the extraction part carries out

conducting coordinate conversion so as to determine projection points of the respective pixels in the corresponding sub image region, on XY, XZ, and YZ planes defined by the world ordinate system, respectively;
carrying out line segment fitting with respect to the projection points on the XY, XZ, and YZ planes, respectively; and
extracting the feature vector of the corresponding sub image region, generated based on parameters related to the line segments fitted on the XY, XZ, and YZ planes.

11. A program for causing a computer to carry out the method of recognizing a road scene according to any one of claims 1 to 8.

12. A non-transitory computer-readable medium storing computer-executable instructions for execution by a processing system, wherein the computer-executable instructions, when executed, cause the processing system to carry out the method of recognizing a road scene according to claim 1 to 8.

## FIG.1A　FIG.1B　FIG.1C

## FIG.2

START

DIVIDE DISPARITY MAP INCLUDING ROAD SCENE INTO SUB IMAGE REGIONS ～S210

FOR EACH SUB IMAGE REGION, EXTRACT FEATURE VECTOR GENERATED BASED ON PROJECTION INFORMATION OF RESPECTIVE PIXELS THEREIN ON EACH PLANE DEFINED BY WORLD COORDINATE SYSTEM ～S220

DIVIDE DISPARITY MAP INTO CELLS AND DETERMINE SUB FEATURE VECTORS OF CELLS ACCORDING TO FEATURE VECTORS OF SUB IMAGE REGIONS ～S230

RECOGNIZE ROAD SCENE BASED ON SUB FEATURE VECTORS OF CELLS BY USING PRE-TRAINED CLASSIFIER ～S240

END

# FIG.3A

# FIG.3B

# FIG.4

```
START
```

CONDUCT COORDINATE CONVERSION WITH
RESPECT TO RESPECTIVE PIXELS IN SUB IMAGE
REGION SO AS TO DETERMINE POINTS
PROJECTED ON XY, XZ, AND YZ PLANES  — S2201

PERFORM LINE SEGMENT FITTING ON POINTS
PROJECTED ON XY, XZ, AND YZ PLANES  — S2202

EXTRACT FEATURE VECTOR GENERATED BASED
ON PARAMETERS RELATED TO LINE SEGMENTS
FITTED ON XY, XZ, AND YZ PLANES  — S2203

```
END
```

FIG.5A

FIG.5B

FIG.5C

FIG.5D

FIG.6A

FIG.6B

FIG.6C

FIG.7A

FIG.7B

# FIG.8A

# FIG.8B

# FIG.8C

**FIG.8B** axes: $\theta_{zy}$ (vertical), $\rho_{xz}$, $\theta_{xz}$ (horizontal), labeled NON-ROAD-SURFACE OBJECTS, ROAD-SURFACE OBJECTS

**FIG.8C** axes: $\rho_{zy}$ (vertical), $\theta_{zy}$ (horizontal), labeled NON-ROAD-SURFACE OBJECTS, ROAD-SURFACE OBJECTS

# FIG.9

Axes: $\rho_{xy}$ (vertical), $\theta_{xy}$ (horizontal)

# FIG.10

VANISHING LINE

Axes: $\rho_{xy}$ (vertical), $\theta_{xy}$ (horizontal)

# FIG.11

# FIG.12A

# FIG.12B

# FIG.13

# FIG.14

Europäisches
Patentamt

European
Patent Office

Office européen
des brevets

# EUROPEAN SEARCH REPORT

Application Number

EP 16 17 3570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID PFEIFFER ET AL: "Towards a Global Optimal Multi-Layer Stixel Representation of Dense 3D Data", PROCEDINGS OF THE BRITISH MACHINE VISION CONFERENCE 2011, 29 August 2011 (2011-08-29), pages 51.1-51.12, XP055060913, DOI: 10.5244/C.25.51 ISBN: 978-1-90-172543-8 * abstract; figures 1-7 * * sections 1-6 * ----- | 1-12 | INV. G06K9/00 |

TECHNICAL FIELDS
SEARCHED (IPC)

G06K

The present search report has been drawn up for all claims

| Place of search | Date of completion of the search | Examiner |
|---|---|---|
| The Hague | 10 November 2016 | Nilsson, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201510358232